# EUROPEAN PATENT SPECIFICATION

(11) **EP 3 921 447 B1**
(45) Date of publication and mention of the grant of the patent: **07.06.2023**
(21) Application number: 20702162.7
(22) Date of filing: 04.02.2020
(51) Int. Cl.: C21C 1/02, C21C 5/36, C21C 5/54, C21C 7/064

(54) **PROCESS FOR REFINING STEEL AND DEPHOSPHORIZATION AGENT USED IN SAID PROCESS**
VERFAHREN ZUR VEREDELUNG VON STAHL UND IN BESAGTEM VERFAHREN VERWENDETES ENTPHOSPHORUNGSMITTEL
PROCÉDÉ D'AFFINAGE D'ACIER ET AGENT DE DÉPHOSPHORISATION UTILISÉ DANS LEDIT PROCÉDÉ

(30) Priority: 06.02.2019 EP 19155739
(43) Date of publication of application: 15.12.2021
(73) Proprietor: S.A. LHOIST RECHERCHE ET DEVELOPPEMENT, 1342 Ottignies-Louvain-la-Neuve (BE)
(72) Inventor: NISPEL, Michael, 1348 Louvain-la-Neuve (BE); NOLDIN, Jose, 1410 Waterloo (BE)
(74) Representative: Calysta NV
(86) International application number: PCT/EP2020/052755
(87) International publication number: WO 2020/161136

(56) References cited:
- EP-A1- 1 002 881
- RU-C2- 2 327 743
- US-A1- 2015 000 470

## Description

### Technical Domain

The present invention is related to a process for refining and dephosphorizing steel comprising the steps of:
- charging a vessel with metallic charge;
- charging said vessel with calcium-magnesium compound;
- charging said vessel with a slag conditioner;
- blowing oxygen through a lance over said metallic charge into the said vessel;
- allowing the formation of a slag containing impurities as an upper phase over molten refined steel as a lower phase;
- separating the said slag from the said molten refined steel.

### Technological Background of the invention

In nature, metals are found in impure states called ores, often oxidized and mixed in with silicates of other metals. To extract the metal from the ores, different processes exist such as physical purification steps, hydrometallurgy, pyrometallurgy, lixiviation and electrometallurgy.

The present invention merely relates to conversion process, following smelting process during which the ore is exposed to high temperatures to form hot metal. During smelting, a part of the impurities contained in the ore are already separated from the molten metal.

Document EP 1002881 discloses a method to obtain ferrite-calcium flux with specified physico-chemical properties and to reduce solid fuel consumption required for preparing the ferrite calcium flux especially to be used in a blast furnace or smelting process. The focus of this document is the necessity to reach a specific stoichiometric coefficient showing a number of cation (Me) falling for one anion in the system between 0.75 to 0.82. The calculation condition of the specific stoichiometric coefficient are obscure.

To produce refined metal, EAF (Electric Arc Furnaces) or EOF (Energy Optimizing Furnaces) or converters such as BOF (Basic Oxygen Furnaces) or AOD (Argon Oxygen Decarburization) converters in which oxygen gas is blown to burn carbon, silicon and phosphorus are present.

Document US 2015/000470 describes a pre-treatment of molten metal and propose a method for conducting desiliconization and dephosphorization of molten iron in a small amount of a flux solvent used, which is capable of suppressing the production cost of low-phosphorus molten iron, increasing the amount of scrap used and further reducing the loss of base metal incorporated into the slag.

Nowadays, the most commonly way to remove phosphorus compound from hot metal or other metallic charge resides in the use of converter, more particularly basic oxygen furnace (BOF) converters of various types, such as top blown, bottom blown or combined blown converters.

Alternatively, hot metal can also be dephosphorized in a ladle after the dephosphorization process by oxygen addition into the metal.

Nowadays, in many refining processes, a lime composition containing oxides, such as quicklime and/or dolime and scrap material are introduced into the converter to control the kinetic and the chemistry of the reaction of forming slag, thereby assisting in the removal of impurities and protecting the furnace refractory lining from excessive wear.

The lime composition is charged into the vessel under the form of pebble or even in a powdery state. Quicklime and/or dolime are floating on the hot metal bath thereby forming an interface.

During the refining, molten metal obtained from smelting is fed into the vessel (converter or ladle with refractory walls) wherein scrap material may also be charged.

The molten metal from smelting generally comprises an initial carbon content of 40-45 kg/ton of molten metal and an initial phosphorus content of 0.5-1.5 kg/ton of molten metal.

The lime composition is charged and floats upon the molten metal bath. Oxygen is blown for a predetermined period of time, in order, to oxidize carbon, phosphorus and silicon compounds. During the blowing of oxygen, the lime composition is immersed into the molten metal bath and dissolves/smelts slightly at the interface between the molten metal and the lime composition still floating, helping in the formation of a new phase called slag.

The slag is a layer of oxides floating over the bath resulting from
- the SiO₂ formation due to silicon oxidation;
- the formation of other oxides (MnO and FeO) during the blowing;
- the addition of lime composition to neutralize the SiO₂ action on the refractory lining and to liquefy and activate the slag, and;
- the MgO coming from the wear of the refractory lining.

During the conversion process, carbon is oxidized to form gaseous CO and CO₂. At the end of the step of blowing oxygen, the carbon content is reduced below 0.5 kg/ton of molten metal, meaning about 500 ppm.

At the interface between the molten metal and the slag, the following reaction occurs:

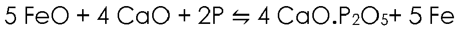

This reaction is exothermic and it is desired to displace the equilibrium to the right in order to maximize the yield of iron and the rate of dephosphorization.

Generally, in order to meet this requirement, the conversion process includes the steps of :
- controlling the temperature of the molten metal in the vessel, preferably at temperatures below 1600°C;
- providing a slag conditioner for fluidizing the slag as much as possible;
- blowing argon and/or nitrogen in the vessel, preferably from the bottom of the vessel for homogenizing the metal bath;
- providing an excess of quicklime to complete the reaction herein above and to neutralize the silica such that the basicity index (or basicity) CaO/SiO₂ (weight of calcium oxide ratio to weight silica) is comprised between 3 and 6 ;
- creating sufficient amount of slag.

Magnesium oxide is typically present in the slag and is originating from the refractory lining wearing which can be reduced with controlled addition of dolime.

Refining hot metal, more particularly steel, requires optimization of the metal mass balance, the oxygen mass balance and the thermal balance for obtaining a desired liquid metal quantity with a desired chemical composition at a desired temperature. The complexity of improving dephosphorization during refining of hot metal is created inter alia due to the simultaneous effect of the three balances.

The document IN01412MU2006A discloses a process for dephosphorization of steel in Linz Donawitz converter (BOF converter) by pellet addition. This document is focused on the improvement of dephosphorization in the converter-process by cooling the slag in the second half of the refining process. However, such a process requires an additional step to charge pellets into the converter after the charging of mineral additives and the standard coolant, which increases the time and the cost of the steel refining process.

The document US patent 3,771,999 discloses some improvement of dephosphorization in the converter-process by using briquetted lime-based products having 0.5 -15% CaCl₂, NaCl, KCI and/or NaF₂. However, as it also happens for pebble lime, such a lime composition under the form of briquettes generates a loss of up to 20% of burnt lime due to the generation of fines during transportation and handling. Further, substances such as CaCl₂, NaCl, KCI and/or NaF₂ are harmful for the refractory lining of the converter and the environment, due to the nature of halides, leaching from the slag, generated by these substances

The document of Wu Wei and Liu Yue, "The development of calcium ferrite pellets used as dephosphorizing or slagging agents for steelmaking and its application", Advances in Engineering Research (AER), volume 143, p 385-389, discloses an experiment wherein an average value of 272 t of hot metal is charged in a 300 t converter, with an amount of slag forming material of 71 kg/t of hot metal made by an amount of active lime of 42 kg/t of hot metal, an amount of dolomite of 18kg/t of hot metal and an amount of calcium ferrite pellets of 11 kg/t of hot metal. The slag basicity is of 2.7 and the initial phosphorous content is comprised between 0.102 and 0.130 wt%. In this experiment, the lime, the dolomite and the calcium ferrite pellets are added gradually. Two-thirds of lime, all the dolomite and half of the calcium ferrite pellets are added at the beginning of the blowing. After one quarter of the blowing time, the residual lime is added and the residual calcium ferrite pellets are added according to the blowing situation. The dephosphorization rate of hot metal is averagely 85%, which means that the phosphorous content at the end of the process should be comprised between 0.015 and 0.019 wt%. In this experiment, the composition of calcium ferrite pellets comprises between 21 and 28 wt% of CaO equivalent and between 35 and 45 wt% of Fe2O3 equivalent. The amounts of mono-calcium ferrite and di-calcium ferrite in the pellets used in the converter are not mentioned. There is poor description on how the calcium ferrite pellets are manufactured. The document is silent about any industrial process of manufacturing calcium ferrite pellets at a large scale. In any case, all the disclosed examples of calcium ferrite pellets are manufactured with an excess of iron oxide relative to calcium oxide. From this document, it looks like the preferred composition of pellets has a ratio Iron oxide to calcium oxide of 3:1 corresponding to a sample having good melting properties.

The document EP3042965 from the applicant discloses a process for dephosphorization of molten metal during a refining process comprising the steps of :
- charging a vessel with hot metal and optionally scrap;
- charging said vessel with a first lime composition;
- blowing oxygen into said vessel;
- forming slag with said first lime composition charged into said vessel;
- dephosphorization of hot metal to form a refined metal reduced in phosphorous components and;
- discharging said refined metal reduced in phosphorous components;
characterized in that said first lime composition comprises at least one first calcium-magnesium compound fitting the formula aCaCO₃.bMgCO₃.xCaO.yMgO.ul, wherein I represents impurities, a, b and u each being mass fractions ≥ 0 and ≤50%, x and y each being mass fractions ≥0 and ≤100%, with x+y ≥ 50% by weight, based on the total weight of said at least one calcium magnesium compound, said at least one calcium magnesium compound being in the form of particles, said first lime composition having a cumulative calcium and magnesium content in the form of oxides greater than or equal to 20% by weight based on the total weight of the first lime composition, and being in the form of compacts, each compact being formed with compacted and shaped particles of calcium magnesium compounds, said compacts having a Shatter test Index of less than 20%, and in that said dephosphorization step of hot metal leads to a refined metal reduced in phosphorous components to the extent that is refined metal reduced in phosphorous is showing a phosphorous content lower than 0.02 wt% based on the total weight of the refined metal reduced in phosphorous. According to the same document, the first lime composition or a further lime composition may comprise another compound chosen in the group consisting of B₂O₃, TiO₂, Calcium aluminate, calcium ferrite such as Ca₂Fe₂O₅ or CaFe₂O₄, metallic iron, CaF₂, C, one or several oxides, such as an oxide based on aluminum, an oxide based on iron, an oxide based on manganese and their mixture.

The document WO2018007635 of the applicant discloses processes to orientate production of calcium ferrites towards a majority of mono-calcium ferrites or a majority of di-calcium ferrites. However, there is no evidence that one phase is more suitable than another one to increase the rate of dephosphorization and in which quantities these phases have to be used in a steel refinery process for increasing the rate of dephosphorization.

There is a need to provide a process for refining steel while improving the rate of dephosphorization of said steel. In a process used on a large scale such as steel refinery, even a small improvement can be regarded as significant. There is a further need to provide a process for refining steel using a slag conditioner which is environment friendly and which can be obtained by a relatively simple and well controlled process. Those objectives are achieved by the present invention.

### Brief summary of the invention

The present invention, disclosed in appended claims 1-12, relates to a process for refining steel as mentioned in the beginning characterized in that the slag conditioner comprises:
- calcium at an amount, expressed as CaO equivalent, measured by X-ray fluorescence spectrometry, of at least 40 wt% relative to the weight of the slag conditioner,
- iron at an amount, expressed as iron oxide Fe₂O₃, of at least 20 wt%, more preferably of at least 30 wt% relative to the weight of the slag conditioner; and
- phases of calcium ferrites wherein the mass ratio of mono-calcium ferrites : di -calcium ferrites is superior to 0.5, said phases being measured X-ray diffraction (XRD) coupled with Rietveld refinement;
and in that said calcium-magnesium compound is charged at a minimum amount, expressed in CaO equivalent, equal or superior to 20 kg/t of metallic charge and said slag conditioner is charged at a minimum amount equal or superior to 2 kg/t of metallic charge, preferably at a minimum amount equal or superior to 2,5 kg/t, preferably equal or superior to 3 kg/t, more preferably equal to or superior to 3,5 kg/t, in particular equal to or superior to 4 kg/t of metallic charge.

The inventors have established for the first time a correlation between the rate of dephosphorization, the increase of yield of steel and the mass ratio of mono-calcium ferrite to di-calcium ferrite.

The rate of dephosphorization increases with the presence of mono-calcium ferrite. With the minimum proportions of slag conditioner and quicklime mentioned above, the rate of dephosphorization can be increased by 10 % with a slag conditioner having a mass ratio mono-calcium ferrite : di-calcium ferrite of 0.5 or more.

The rate of dephosphorization according to the present invention is particularly high even when dephosphorization is performed in a single step in contrast to US2015/000470.

Of course if wished, the dephosphorization present invention can also in a variant be carried out in multiple dephosphorization steps, such as for example separated by slag removal step.

The slag conditioner is preferably under the form of a shaped object, preferably under the form of briquettes.

According to the present invention, the term "briquette" means a compact of oblong shape, weighing about 5 to 100 g per briquette, inscribed in a flattened or elongated ellipsoid of revolution ("oblate ellipsoid of revolution" or "prolate ellipsoid of revolution"). Typically, briquettes have the shape of a bar of soap or are described as "egg briquettes".

According to the present invention, the process comprises some charging steps. It is to be understood that the sequence of the charging step can be any sequence depending on the specificities of the steel making plant and process. Preferably, the charging steps have the following sequence:
- charging a vessel with metallic charge;
- charging said vessel with calcium-magnesium compound;
- charging said vessel with a slag conditioner.

Preferably, when the metallic charge is hot liquid metal such as for example hot liquid iron-containing material, a step of charging the said vessel with scrap is previously performed before the said step of charging hot metallic charge, in order to prevent damage on the refractories of the vessel while pouring the hot metal in the vessel.

Preferably, the slag conditioner of the present invention is manufactured according to the process disclosed generally speaking in document WO2018007635 which comprises the steps of:
- providing a powdery mixture comprising :
   o at least 40 wt.% of a quick calcium-magnesium compound expressed in CaO + MgO equivalent relative to the weight of the said mixture, and having a Ca/Mg molar ratio greater than or equal to 1, preferably greater than or equal to 2, more preferably greater than or equal to 3, said calcium-magnesium compound being under the form of particles having a particle size inferior to 2 mm and comprising a fraction of at least 20% of particles having a particle size inferior or equal to 90 µm and;
   o between 20 wt.% and 60 wt%, preferably between 30wt.% and 50wt.%, preferably between 40wt.% and 50 wt.% of an iron-based compound expressed in Fe₂O₃ equivalent relative to the weight of said mixture, said iron-based compound having a particle size distribution characterized by a median size d₅₀ less than 100 µm, preferably less than 50 µm and a particle size distribution d₉₀ of less than 200 µm, preferably less than 150 µm, preferably less than 130 µm, more preferably less than 100 µm and comprising at least 50% by weight, preferably at least 60% by weight, more preferably at least 70% by weight, more preferably at least 80% by weight and in particular more than 95% by weight of iron oxide in the form of hematite Fe₂O₃ relative to the total weight of the iron-based compound;
- feeding a roller press with said powdery mixture,
- compression in said roller press of said powdery mixture, said rollers of the roller press developing linear velocities at the periphery of the rolls of between 10 and 100 cm/s, preferably of between 20 and 80 cm/s, and linear pressures of between 60 and 160 kN/cm, preferably between 80 and 140 kN/cm, and even more preferably between 80 and 120 kN/cm to obtain a composition in the form of green briquettes;
- collecting said green briquettes; and
- heating said green briquettes at a temperature of less than or equal to 1200 ° C, preferably less than or equal to 1150 ° C, more preferably less or equal than 1 100°C more preferably greater than or equal to 900 ° C during a time comprised between 3 and 20 minutes, preferably greater than or equal to 5 minutes and less than or equal to 15 minutes.

By the term "calcium-magnesium compound, it is meant within the meaning of the present invention a calcium-magnesium compound such as "quick" calcium-magnesium compound, limestone, dolostone, or their mixture.

The term "quick" calcium-magnesium compound means, in the sense of the present invention, a solid mineral material whose chemical composition is mainly calcium oxide and/or magnesium oxide. The "quick" calcium-magnesium compound in the sense of the present invention therefore refers to quicklime (calcium lime), dolomitic quicklime or "quick" calcined dolomite. The "quick" calcium-magnesium compounds may contain impurities, preferably less than 10 wt%, more preferably less than 5wt%.

The term "metallic charge" means within the meaning of the present invention hot metal or liquid hot metal from blast furnace fed to a converter but also to some extend to charge containing metal fed to electric arc furnace, or any kind of iron-containing material for example hot metal, liquid hot metal from blast furnace, scrap, filter dust, iron ore.

Preferably, the step of heating the green briquettes for forming the slag conditioner is performed in a furnace on a 100 mm thick static bed of briquettes.

Preferably the calcium-magnesium compound used in the process for manufacturing the slag conditioner is quicklime.

For manufacturing a slag conditioner used in the present invention, amounts have been selected within the above-mentioned amounts of calco-magnesian compound and iron based compound. The selected amounts, their granulometry, and the control of the step of heating are of high importance to obtain a slag conditioner under the form of briquettes which comprises high amounts of calcium ferrites, i.e. superior to 30wt.% and up to 50 wt.% relative to the weight of the briquettes, more particularly, having a mass ratio mono-calcium ferrites: di-calcium ferrites superior to or equal to 0.5.

Higher yield of production of calcium ferrites in the briquettes is obtained with an amount of quicklime superior to 40 wt.%, an amount of iron oxide under the form of hematite Fe₂O₃ in amounts comprised between 40 wt.% and 50 wt.%.

A higher yield of production of mono-calcium ferrite in the briquettes is obtained by using hematite having a particle size distribution characterized by a d₉₀ inferior to 50 µm and by using milled quicklime having a particle size distribution inferior to 2 mm wherein at least 30 wt% of the quicklime has a particle size inferior to 90 µm (in other words, the d₃₀ is inferior to 90 µm).

More preferably the quicklime used is a blend of 50 wt% of the quicklime having a particle size distribution inferior to 2 mm wherein at least 30 wt% of the quicklime has a particle size inferior to 90 µm and of 50 wt.% of quicklime having a d₁₀₀ inferior to 90 µm.

Even more preferably, a higher yield of mono-calcium ferrites in the briquettes is obtained by controlling the heating step to a temperature of 1 100°C for 20 minutes.

The slag conditioner obtained by such process is under the form of briquettes having a Shatter test index of less than 8%, preferably less than 6%, preferably less than 4%, and even more preferably preferred less than 3%, in particular less than 2%, which is suitable for transportation and handling to the vessel used for steel refinery and which minimize production of fines during transportation.

The term "shatter test index" means, in the sense of the present invention, the percentage by weight of fines under 10 mm generated after 4 drops from 2 m starting from 10kg of product. These fines are quantified by sieving through a screen with square mesh of 10 mm after 4 drops from 2 m.

Preferably, in the process of manufacturing the slag conditioner, the said compression step is carried out in the presence of a binder or a lubricant, more particularly chosen from the group consisting of binders of mineral origin such as cements, clays and silicates, binders of vegetable or animal origin, such as celluloses, starches, gums, alginates, pectin, glues, binders of synthetic origin, such as polymers, waxes, liquid lubricants such as mineral oils or silicones, solid lubricants such as talc, graphite, paraffins, stearates, in particular calcium stearate, magnesium stearate and mixtures thereof, preferably calcium stearate and/or stearate magnesium, at a content of between 0.1 and 1% by weight, preferably between 0.15 and 0.6% by weight, more preferably between 0.2 and 0.5% by weight relative to the total weight of said briquettes.

Preferably, in the process for refining steel according to the present invention, said slag conditioner is charged at a maximum amount inferior or equal to 15kg/t of metallic charge (e.g. hot metal), preferably inferior to or equal to 12kg/t of metallic charge (e.g. hot metal), more preferably inferior to or equal to 10kg/t of metallic charge (e.g. hot metal).

It is advantageous to minimize the consumption of the slag conditioner. The efficiency of the dephosphorization of steel in presence of the slag conditioner according to the present invention allows limited consumption of such slag conditioner.

Preferably, in the process for refining steel while improving the rate of dephosphorization of said steel, the calcium-magnesium compound is charged at a maximum amount inferior to or equal to 100kg/t, preferably inferior to or equal to 80 kg/t, more preferably inferior to or equal to 60kg/t of metallic charge (e.g. hot metal).

In an advantageous embodiment of the process according to the present invention, a step of charging recycled slag, preferably before, during or after charging said slag conditioner is foreseen. Indeed, it can be useful in some case to be able to recycle former slag, which still contains iron and calcium oxide and/or magnesium oxide, thereby reducing the amount of slag conditioner to be used in the refining process.

Preferably, the molten refined steel has a temperature in the said vessel which is controlled by addition of scrap in a sufficient amount to not exceed 1850°C. It has been seen experimentally that good rates of dephosphorization of molten steel could be reached at temperatures higher than 1650°C, and even at temperatures higher than 1700°C which are generally considered as detrimental temperatures for dephosphorizing steel.

In a more advantageous embodiment of the process according to the present invention for refining steel, thanks to the use of the slag conditioner in the optimized quantities mentioned above, the process can be performed even without bottom stirring. Bottom stirring is typically applied in converter vessels for its beneficial impact on the rate of dephosphorization of steel. Bottom stirring is typically achieved by flowing an inert gas such as nitrogen or argon from nozzles arranged at the bottom of the vessel. Due to the mechanical wear, chemical wear and thermo-chemical stress on the bottom stirring plugs, periodic maintenance of nozzles and bottom stirring plugs is required, which also involves stopping of the steel production. The rate of dephosphorization of steel obtained by the process according to the invention with and without bottom stirring are substantially the same, which means that by the process according to the invention, bottom stirring, consumption of inert gas, and maintenance is no longer necessary. In other words, according to the present invention, the stirring of the vessel is sufficient to be carried out by means consisting of blowing oxygen from the top of the vessel.

Preferably, a predetermined amount of the said slag conditioner is introduced in the said vessel before the step of blowing oxygen.

Alternatively, a predetermined amount of the said slag conditioner is introduced in the said vessel during the said step of blowing oxygen.

Alternatively, a predetermined amount of the said slag conditioner is introduced in said vessel during the step of formation of the slag.

The predetermined amount of the slag conditioner can be less than 50 weight % relative to the whole amount of the slag conditioner to be added. In such a case, according the present invention, it is foreseen that the slag conditioner is added over several steps spread along the refining process. If the predetermined amount of the slag conditioner to be added either before, during or after the step of blowing oxygen, the remaining amount to be added can be added in one or more than one step spread along the refining process.

Sometimes, it will be preferred that the predetermined amount correspond to the whole amount of slag conditioner to be added during the refining process. In such a case, the whole amount can be added before, during or after blowing oxygen.

Preferably, the said hot metal comprises an initial amount of phosphor expressed in equivalent P₂O₅ comprised between 500 and 1500 ppm.

Preferably, the said slag conditioner present a SiO₂ amount expressed in SiO₂ equivalent lower than 1 w%, preferably lower than or equal to 0,9 w%, preferably lower than or equal to 0,75 w%, preferably lower than or equal to 0,6 w%.

Preferably, the basicity of the slag is comprised between 3 and 6.

Other embodiments according to the present invention are mentioned in the appended claims

Other characteristics and advantages of the present invention will be derived from the non-limitative following description, and by making reference to the drawings and the examples.

### Drawings.-

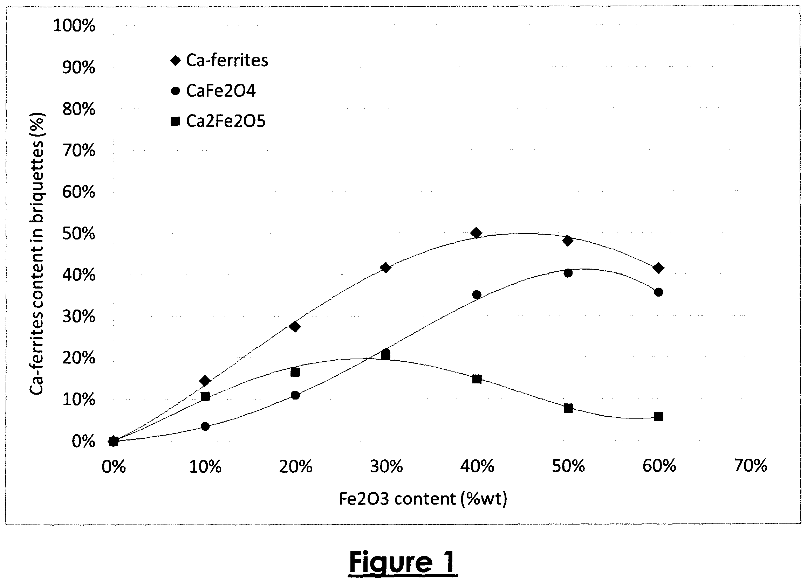

Fig. 1 is a graph showing the amount of calcium ferrites including mono-calcium ferrites and di-calcium ferrites in a slag conditioner shaped under the form of briquettes and obtained according to a process wherein quicklime and hematite are briquetted and heated at 1100°C for 20 minutes in function of the amount of iron oxide under the form of hematite.

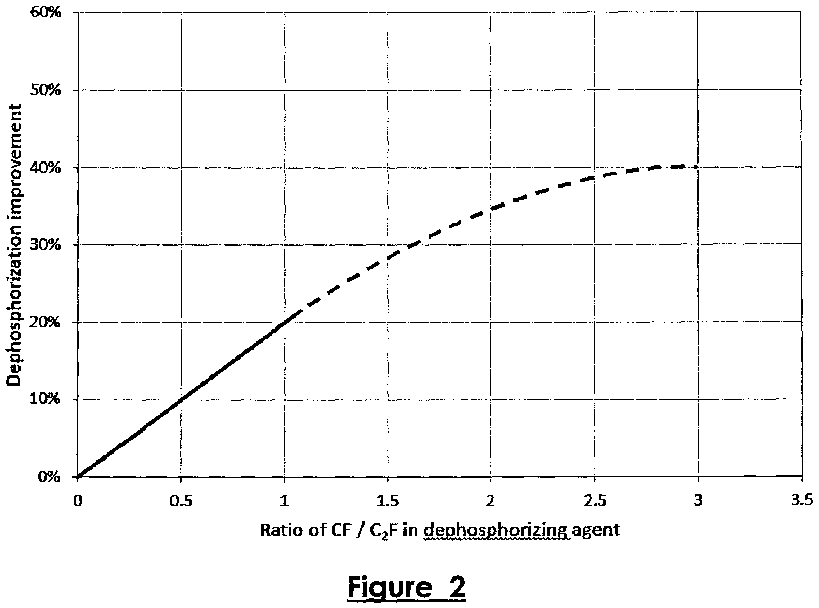

Fig. 2 is a graph showing the evolution of the dephosphorization improvement in function of the mass ratio of mono-calcium ferrite : di-calcium ferrites in a steel refining process using a predetermined amount of slag conditioner and a predetermined amount of quicklime.

**Detailled description of the invention and Examples.**

According to the present claimed invention, a process for refining and dephosphorizing of steel is performed. The process comprises the steps of :
- charging a vessel with scrap;
- charging said vessel with hot metal;
- charging said vessel with quicklime;
- charging said vessel with a slag conditioner;
- blowing oxygen through a lance over said hot metal into the said vessel;
- allowing the formation of a slag containing impurities as an upper phase over molten refined steel as a lower phase; and
- separating the said slag from the said molten refined steel.

The process is characterized in that said slag conditioner comprises:
- calcium at an amount, expressed as CaO equivalent, measured by X-ray fluorescence spectrometry, of at least 40 wt% relative to the weight of the slag conditioner,
- iron at an amount, expressed as iron oxide Fe₂O₃, measured by X-ray fluorescence spectrometry, comprised between 20wt.% and 60wt.%, preferably between 30wt.% and 50wt.%, more preferably between 40wt.% and 50wt.% relative to the weight of the slag conditioner;
- phases of calcium ferrites wherein the mass ratio of mono-calcium ferrites : di -calcium ferrites is superior to 0.5, said phases being measured X-ray diffraction coupled with Rietveld refinement.

The process is further characterized in that the minimum amount of quicklime is equal or superior to 20 kg/t of metallic charge (e.g. hot metal) and the minimum amount of said slag conditioner is equal or superior to 2 kg/t of metallic charge (e.g. hot metal).

The slag conditioner is obtained from the manufacturing process mentioned above.

The process for refining steel according to the invention is realized with a slag conditioner obtained according to the manufacturing process described above.

### Examples 1 to 3.-

The slag conditioner is obtained by providing a mixture comprising an amount of quicklime expressed under CaO equivalent of 62.5 wt% and hematite expressed in equivalent Fe₂O₃ of 35.2 wt% and the rest of impurities including MgO, SiO₂, MnO and Al₂O₃, relative to the weight of the mixture.

The quicklime used has a particle size inferior or equal to 2 mm, with at least 30 wt.% of the quicklime particles having a particle size inferior or equal to 90 µm relative to the weight of the quicklime. The d₉₀ of the hematite is inferior or equal to 50 µm.

After briquetting the mixture and heating the green briquettes thereby obtained at 1 100°C during 20 minutes, the resulting calcinated (thermally treated) briquettes of slag conditioner comprise 21.2 wt.% of mono-calcium ferrite, 30.2 wt% of di-calcium ferrites, a residual amount of iron oxide Fe₂O₃ of 1.8 wt% and the rest of unreacted quicklime and impurities relative to the weight of the slag conditioner.

The phases of mono-calcium ferrite and of di-calcium ferrites are measured by XRD coupled with Rietveld refinement to quantify the phases. The ratio mono-calcium ferrite : di-calcium ferrite is of 0.7.

The parameters and the results of the process of refining steel according to the invention are presented in table 1 for three examples (Ex. 1 to 3) using the slag conditioner shaped under the form of briquettes and thermally treated further comprising 21.2 wt% of mono-calcium ferrites and 30.2 wt% of di-calcium ferrites relative to the weight of the briquettes. The amounts of scrap, quicklime, slag conditioner are presented in kg/t of hot metal (HM).

**Table 1.-**

| **parameters** | **Units** | **Ex. 1.-** | **Ex. 2.-** | **Ex. 3.-** |
|---|---|---|---|---|
| scrap | Kg/t | 237 | 292 | 303 |
| quicklime | Kg/t | 56 | 40 | 56 |
| Slag conditioner | Kg/t | 9 | 5 | 10 |
| O₂ | Nm³/t | 54 | 63 | 50 |
| O₂ flow rate | Nm³/min | 624 | 650 | 621 |

| ***Elements in hot metal before dephosphorization*** | | | | |
|---|---|---|---|---|
| C | wt.% | 4,4 | 4,5 | 4,5 |
| Si | wt.% | 0,58 | 0,31 | 0,43 |
| Mn | wt.% | 0,37 | 0,31 | 0,30 |
| P | wt.% | 0,091 | 0,08 | 0,075 |
| Temperature of hot metal | °C | 1342 | 1328 | 1365 |

| ***Elements in refined steel*** | | | | |
|---|---|---|---|---|
| *C* | wt.% | 0,028 | 0,017 | 0,031 |
| *Si* | wt.% | 0 | 0 | 0 |
| *Mn* | wt.% | 0,14 | 0,11 | 0,13 |
| P | wt.% | **0,01** | **0,01** | **0,008** |
| Steel temperature | °C | 1706 | 1761 | 1695 |
| **Fe in slag** | wt.% | 16,5 | 17,7 | 15,0 |
| Slag basicity | - | 4 | 3,5 | 4,8 |
| **bottom stirring efficiency** | % | 0 | 83 | 0 |
| Lp (wt.% of P₂O₅ in the slag / wt.% of P in the steel) | - | 226 | 151 | 203 |

The table 1 shows that with less than 10 kg of slag conditioner by ton of hot metal and between 40 to 60 kg of quicklime by ton of hot metal, it is possible to obtain residual amounts of phosphor in the refined steel under or equal to 0.01 wt.

In the example 1 and example 3, the refining process is performed without bottom stirring and presents similar results in term of dephosphorization than example 2 performed with 83% of the nozzles in function. It is therefore possible to realize a steel refining process according to the invention without bottom stirring thereby suppressing the needs of consumption of inert gas, and maintenance of nozzles and bottom stirring plugs.

The results of table 1 also shows that good rates of dephosphorization can be achieved even at temperatures superior to 1700°C. Such high temperatures are usually avoided in the art because decreases of the efficiency of dephosphorization are observed. Therefore by allowing to achieve higher tapping temperatures without negative impact on the dephosphorization, the process of refining steel according to the invention minimizes the need of heating the liquid steel during secondary metallurgy processing, further reducing the production cost.

### Comparative examples 1 to 3.-

Three comparative examples of a process of refining steel are realized in similar conditions than examples 1 to 3, but without the slag conditioner presented above. The parameters and the results of these comparative examples (Comp Ex. 1 to 3) are presented in table 2.

**Table 2.-**

| **Parameter** | **Unit** | **Comp Ex. 1** | **Comp Ex. 2** | **Comp Ex. 3** |
|---|---|---|---|---|
| scrap | Kg/t | 269 | 322 | 327 |
| lime | Kg/t | 62 | 54 | 46 |
| 02 | Nm³/t | 57 | 63 | 55 |
| 02 flow rate | Nm³/min | 660 | 680 | 577 |

| ***Elements in hot metal before dephosphorization*** | | | | |
|---|---|---|---|---|
| C | wt.% | 4,5 | 4,5 | 4,4 |
| Si | wt.% | 0,48 | 0,37 | 0,36 |
| Mn | wt.% | 0,31 | 0,31 | 0,29 |
| P | wt.% | 0,083 | 0,091 | 0,085 |
| HM Temperature | °C | 1340 | 1245 | 1325 |

| ***Elements in refined steel*** | | | | |
|---|---|---|---|---|
| *C* | wt.% | 0,027 | 0,02 | 0,03 |
| *Si* | wt.% | 0 | 0 | 0 |
| *Mn* | wt.% | 0,17 | 0,15 | 0,23 |
| P | wt.% | 0,018 | 0,018 | 0,024 |
| Steel temperature | °C | 1635 | 1673 | 1700 |
| **Fe in slag** | wt.% | 20,7 | 22,2 | 16,8 |
| Slag basicity | | 3,9 | 4,1 | 3,5 |
| **bottom stirring efficiency** | % | 0 | 16 | 50 |
| Lp | | 91 | 74 | 66 |

The table 2 shows that the comparative examples realized with similar amounts of quicklime and scrap than example 1 to 3 but without slag conditioner presents lower rates of dephosphorization.

### Comparative examples 4 to 6.-

Other comparative examples of a refining steel process are realized in similar conditions than example 1 to 3 but the slag conditioner is replaced by compacts obtained from a mixture comprising 10.4 wt.% of iron oxide having a particle size under 50µm, 85.3 wt.% of quicklime having a particle size inferior to 3mm, 0.02 wt% of calcium stearate, and the rest of impurities.

The mixture is compacted within a rotating press under a pressure of 450MPa with a closing speed of the punches of 204mm/s and a holding time of 70ms.

The green compact are then heated at 1100°C for 20 minutes and the compacts comprises 5.9 wt% of mono-calcium ferrites and 5.9 wt% of di-calcium ferrites relative to the weight of the compact.

The comparative example 6 is realized in a smaller vessel than comparative examples 4 and 5.

In the comparative example 6, the oxygen flow rate is set to 17 Nm³/min until the end of blowing and then set down to 3.6 Nm³/min. This difference of oxygen consumption is linked to the size of the vessel and has no impact on the steel refining process.

The parameters and results of the comparative examples 4 to 6 (Comp. Ex. 4 to 6) are presented in table 3.

**Table 3.-**

| **parameter** | **units** | **Comp Ex. 4** | **Comp Ex. 5** | **Comp Ex. 6** |
|---|---|---|---|---|
| scrap ratio | Kg/t | 282 | 217 | 131,63 |
| lime | Kg/t | 40 | 34 | 32,04 |
| compact 10% Fe2O3 TT | Kg/t | 19 | 16 | 4,08 |
| 02 | Nm³/t | 62 | 55 | 51,00 |
| 02 flow rate | Nm³/min | 624 | 620 | 17,00 |
| | Nm³/t min | | | 3,60 |

| ***Elements in hot metal before dephosphorization*** | | | | |
|---|---|---|---|---|
| C | wt.% | 4,4 | 4,4 | 3,62 |
| Si | wt.% | 0,52 | 0,56 | 0,37 |
| Mn | wt.% | 0,37 | 0,38 | 0,42 |
| P | wt.% | 0,082 | 0,084 | 0,076 |
| HM Temperature | °C | 1313 | 1249 | |

| ***Elements in refined steel*** | | | | |
|---|---|---|---|---|
| *C* | wt.% | 0,022 | 0,025 | |
| *Si* | wt.% | 0 | 0 | |
| *Mn* | wt.% | 0,18 | 0,18 | |
| P | wt.% | 0,009 | 0,009 | 0,015 |
| Steel temperature | °C | 1697 | 1687 | 1682 |
| **Fe in slag** | wt.% | 18,5 | 17,0 | |
| Slag basicity | | 3,8 | 3,5 | 3 to 6 |
| **bottom stirring efficiency** | % | 50 | 50 | 100 |
| Lp | | 172 | 190 | |

As it can be seen from table 3, good dephosphorization rates are obtained with amounts of compacts comprised between 16 and 19 kg by ton of hot metal. However, the rate of dephosphorization is decreased when the same compacts are used in similar amounts by ton of hot metal than in the process according to example 2.

In order to evaluate the influence of the mono-calcium ferrites and the di-calcium ferrites on the rate of dephosphorization, various slag conditioners of different compositions have been prepared by varying the amount of iron oxide under the form of hematite in the manufacturing process mentioned above.

Fig. 1 is a graph showing the amount of calcium ferrites including mono-calcium ferrites and di-calcium ferrites in a slag conditioner shaped under the form of briquettes and obtained according to a process wherein quicklime and hematite are briquetted and heated at 1100°C for 20 minutes in function of the amount of iron oxide under the form of hematite.

The figure 2 shows the evolution of the dephosphorization improvement in a steel refining process in function of the variation of the mass ratio of mono-calcium ferrite : di-calcium ferrites in the slag conditioner, and wherein between 5 and 10 kg of slag conditioner by ton of hot metal and between 40 kg and 60 kg of quicklime by ton of hot metal are added.

As it can be seen, the higher the ratio of mono-calcium ferrite : di-calcium ferrite in the slag conditioner, the higher is the dephosphorization improvement. Therefore, it is essential for the process of steel refining according to the invention to provide a slag conditioner obtained from a process maximizing the yield of production of mono-calcium ferrites.

In order to use the less quantity as possible of slag conditioner by ton of hot metal, the percentage in weight of the mono-calcium ferrite relative to the weight of the slag conditioner must be as high as possible.

Therefore, it is not recommended to provide a slag conditioner obtained from a process of heating a mixture wherein the iron oxide is in excess relative to calcium oxide because even if the ratio of mono-calcium ferrites : di-calcium ferrite can be high, the yield of calcium ferrites production decreases strongly when the amount of iron oxide is over 50 wt.% in the mixture before the heating step.

Furthermore, by the method according to the present invention, a metallic yield improvement has been observed.

It should be understood that the present invention is not limited to the described embodiments and that variations can be applied without going outside of the scope of the appended claims.

## Claims

1. Process for refining and dephosphorizing steel comprising the steps of:
- charging a vessel with metallic charge;
- charging said vessel with a calcium-magnesium compound;
- charging said vessel with a slag conditioner;
- blowing oxygen through a lance over said metallic charge into the said vessel;
- allowing the formation of a slag containing impurities as an upper phase over a molten refined steel as a lower phase;
- separating the said slag from the said molten refined steel;
**characterized in that** the said slag conditioner comprises
- calcium at an amount, expressed as CaO equivalent, measured by X-ray fluorescence spectrometry, of at least 40 wt% relative to the weight of the slag conditioner,
- iron at an amount, expressed as iron oxide Fe₂O₃, of at least 20 wt%, more preferably of at least 30 wt% relative to the weight of the slag conditioner; and
- phases of calcium ferrites wherein the mass ratio of mono-calcium ferrites : di -calcium ferrites is superior to 0.5, said phases being measured X-ray diffraction (XRD) coupled with Rietveld refinement; and
**in that** said calcium-magnesium compound is charged at a minimum amount, expressed in CaO equivalent, equal or superior to 20 kg/t of metallic charge and said slag conditioner is charged at a minimum amount equal or superior to 2 kg/t of metallic charge.

2. Process according to claim 1, wherein said slag conditioner is under the form of a shaped object, preferably under the form of briquettes.

3. Process according to claim 1 or claim 2, **characterized in that** said slag conditioner is charged at a maximum amount inferior or equal to 15 kg/t of metallic charge, preferably inferior to or equal to 12 kg/t of metallic charge, more preferably inferior to or equal to 10 kg/t of metallic charge.

4. Process according to any one of the preceding claims, said calcium-magnesium compound is charged at a maximum amount, expressed in CaO equivalent, inferior to or equal to 100kg/t, preferably inferior to or equal to 80 kg/t, more preferably inferior to or equal to 60 kg/t of metallic charge.

5. Process according to any one of the preceding claims **characterized in that** the molten refined steel has a temperature in the said vessel which is controlled by addition of scrap in a sufficient amount to not exceed 1850°C.

6. Process according to any one of the preceding claims, further comprising a step of charging recycled slag, preferably before, during or after charging said slag conditioner.

7. Process according to any one of the preceding claims **characterized in that** it is performed without bottom stirring.

8. Process according to any one of the preceding claims **characterized in that** a predetermined amount of the said slag conditioner is introduced in the said vessel before the step of blowing oxygen.

9. Process according to any one of the preceding claims **characterized in that** a predetermined amount of the said slag conditioner is introduced in the said vessel during the said step of blowing oxygen.

10. Process according to any one of the preceding claims **characterized in that** a predetermined amount of the said slag conditioner is introduced in said vessel during the step of formation of the slag.

11. Process according to any one of the preceding claims **characterized in that** said slag conditioner presents a SiO₂ amount expressed in SiO₂ equivalent lower than 1 w%, preferably lower than or equal to 0,9 w%, preferably lower than or equal to 0,75 w%, preferably lower than or equal to 0,6 w%.

12. Process according to any one of the preceding claims **characterized in that** the slag has a basicity CaO/SiO₂ comprised between 3 and 6.

## Patentansprüche

1. Prozess zum Raffinieren und Entphosphorisieren von Stahl, der die folgenden Schritte umfasst:
- Laden eines Behälters mit einer metallischen Charge.
- Laden des Behälters mit einer Calcium-Magnesium-Verbindung;
- Laden des Behälters mit einem Schlackenkonditionierer;
- Blasen von Sauerstoff durch eine Lanze über die metallische Charge in dem Behälter;
- Erlauben des Bildens einer Schlacke, die Verunreinigungen enthält, als eine obere Phase über einem geschmolzenen Raffinierstahl als eine untere Phase;
- Trennen der Schlacke von dem geschmolzenen Raffinierstahl;
**dadurch gekennzeichnet, dass** der Schlackenkonditionierer Folgendes umfasst
- Calcium in einer Menge, ausgedrückt als CaO-Äquivalent, gemessen durch Röntgenfluoreszenzspektrometrie, von mindestens 40 Gew.-%, bezogen auf das Gewicht des Schlackenkonditionierers,
- Eisen in einer Menge, ausgedrückt als Eisenoxid Fe2O3, von mindestens 20 Gew.-%, bevorzugter mindestens 30 Gew.-%, bezogen auf das Gewicht des Schlackenkonditionierer, und
- Phasen von Calciumferriten, wobei das Massenverhältnis von Monocalciumferriten zu Dicalciumferriten größer als 0,5 ist, wobei die Phasen durch Röntgenbeugung (XRD) gekoppelt mit Rietveld-Verfeinerung gemessen werden; und
dass die Calcium-Magnesiumverbindung in einer Mindestmenge, ausgedrückt in CaO-Äquivalent, gleich oder größer 20 kg/t metallischer Charge geladen wird, und der Schlackenkonditionierer in einer Mindestmenge gleich oder größer 2 kg/t metallischer Charge geladen wird.

2. Prozess nach Anspruch 1, wobei der Schlackenkonditionierer die Form eines gestalteten Objekts, bevorzugt in Form von Briketts aufweist.

3. Prozess nach Anspruch 1 oder Anspruch 2, **dadurch gekennzeichnet, dass** der Schlackenkonditionierer in einer Höchstmenge kleiner oder gleich 15 kg/t metallischer Charge geladen wird, bevorzugt kleiner oder gleich 12 kg/t metallischer Charge, bevorzugter kleiner oder gleich 10 kg/t metallischer Charge.

4. Prozess nach einem der vorstehenden Ansprüche, wobei die Calcium-Magnesiumverbindung in einer Höchstmenge, ausgedrückt in CaO-Äquivalent, kleiner oder gleich 100 kg/t, bevorzugt kleiner oder gleich 80 kg/t, bevorzugter kleiner gleich 60 kg/t metallischer Charge geladen wird.

5. Prozess nach einem der vorstehenden Ansprüche, **dadurch gekennzeichnet, dass** der geschmolzene Raffinierstahl eine Temperatur in dem Behälter aufweist, die durch Beigabe von Schrott in einer Menge, die ausreicht, um 1850 °C nicht zu überschreiten, gesteuert wird.

6. Prozess nach einem der vorstehenden Ansprüche, der weiter einen Schritt des Ladens von Recycling-Schlacke bevorzugt vor, während oder nach dem Laden des Schlackenkonditionierers umfasst.

7. Prozess nach einem der vorstehenden Ansprüche, **dadurch gekennzeichnet, dass** er ohne Bodenrühren durchgeführt wird.

8. Prozess nach einem der vorstehenden Ansprüche, **dadurch gekennzeichnet, dass** eine vorbestimmte Menge des Schlackenkonditionierers in den Behälter vor dem Schritt des Sauerstoffblasens eingeführt wird.

9. Prozess nach einem der vorstehenden Ansprüche, **dadurch gekennzeichnet, dass** eine vorbestimmte Menge des Schlackenkonditionierers in den Behälter während des Schritts des Sauerstoffblasens eingeführt wird.

10. Prozess nach einem der vorstehenden Ansprüche, **dadurch gekennzeichnet, dass** eine vorbestimmte Menge des Schlackenkonditionierers in den Behälter während des Schritts zum Bilden der Schlacke eingeführt wird.

11. Prozess nach einem der vorstehenden Ansprüche, **dadurch gekennzeichnet, dass** der Schlackenkonditionierer eine SiO₂-Menge, ausgedrückt in SiO₂-Äquivalent, kleiner als 1 Gew.-%, bevorzugt kleiner oder gleich 0,9 Gew.-%, bevorzugt kleiner oder gleich 0,75 Gew.-%, bevorzugt kleiner oder gleich 0,6 Gew.-% aufweist.

12. Prozess nach einem der vorstehenden Ansprüche, **dadurch gekennzeichnet, dass** die Schlacke eine CaO/SiO₂-Basizität zwischen 3 und 6 aufweist.

## Revendications

1. Procédé permettant de raffiner et de déphosphorer de l'acier comprenant les étapes de :
- chargement d'un récipient avec une charge métallique ;
- chargement dudit récipient avec un composé de calcium-magnésium ;
- chargement dudit récipient avec un conditionneur de laitier ;
- insufflation d'oxygène à travers une lance sur ladite charge métallique dans ledit récipient ;
- fait de permettre la formation d'un laitier contenant des impuretés en tant que phase supérieure sur un acier raffiné fondu en tant que phase inférieure ;
- séparation dudit laitier dudit acier raffiné fondu ;
**caractérisé en ce que** ledit conditionneur de laitier comprend
- du calcium en une quantité, exprimée en tant qu'équivalent de CaO, mesurée par spectrométrie de fluorescence X, d'au moins 40 % en poids par rapport au poids du conditionneur de laitier,
- du fer en une quantité, exprimée en tant qu'oxyde de fer Fe₂O₃, d'au moins 20 % en poids, de manière davantage préférée d'au moins 30 % en poids par rapport au poids du conditionneur de laitier ; et
- des phases de ferrites de calcium dans lequel le rapport en masse des ferrites de mono-calcium : ferrites de di-calcium est supérieur à 0,5, lesdites phases étant mesurées par diffraction aux rayons X (XRD) couplée à un raffinage Rietveld ; et
**en ce que** ledit composé de calcium-magnésium est chargé à une quantité minimale, exprimée en équivalent de CaO, supérieure ou égale à 20 kg/t de charge métallique et ledit conditionneur de laitier est chargé à une quantité minimale supérieure ou égale à 2 kg/t de charge métallique.

2. Procédé selon la revendication 1, dans lequel ledit conditionneur de laitier est sous la forme d'un objet façonné, de préférence sous la forme de briquettes.

3. Procédé selon la revendication 1 ou la revendication 2, **caractérisé en ce que** ledit conditionneur de laitier est chargé en une quantité maximale inférieure ou égale à 15 kg/t de charge métallique, de préférence inférieure ou égale à 12 kg/t de charge métallique, de manière davantage préférée inférieure ou égale à 10 kg/t de charge métallique.

4. Procédé selon l'une quelconque des revendications précédentes, ledit composé de calcium-magnésium est chargé en une quantité maximale, exprimée en équivalent de CaO, inférieure ou égale à 100 kg/t, de préférence inférieure ou égale à 80 kg/t, de manière davantage préférée inférieure ou égale à 60 kg/t de charge métallique.

5. Procédé selon l'une quelconque des revendications précédentes **caractérisé en ce que** l'acier raffiné fondu a une température dans ledit récipient qui est régulée par l'ajout de ferraille en une quantité suffisante pour ne pas dépasser 1 850 °C.

6. Procédé selon l'une quelconque des revendications précédentes, comprenant en outre une étape de chargement de laitier recyclé, de préférence avant, pendant ou après le chargement dudit conditionneur de laitier.

7. Procédé selon l'une quelconque des revendications précédentes **caractérisé en ce qu'**il est réalisé sans agitation du fond.

8. Procédé selon l'une quelconque des revendications précédentes **caractérisé en ce qu'**une quantité prédéterminée dudit conditionneur de laitier est introduite dans ledit récipient avant l'étape d'insufflation d'oxygène.

9. Procédé selon l'une quelconque des revendications précédentes **caractérisé en ce qu'**une quantité prédéterminée dudit conditionneur de laitier est introduite dans ledit récipient pendant ladite étape d'insufflation d'oxygène.

10. Procédé selon l'une quelconque des revendications précédentes **caractérisé en ce qu'**une quantité prédéterminée dudit conditionneur de laitier est introduite dans ledit récipient pendant l'étape de formation du laitier.

11. Procédé selon l'une quelconque des revendications précédentes **caractérisé en ce que** ledit conditionneur de laitier présente une quantité de SiO₂ exprimée en équivalent de SiO₂ inférieure à 1 % en poids, de préférence inférieure à égale à 0,9 % en poids, de préférence inférieure à égale à 0,75 % en poids, de préférence inférieure à égale à 0,6 % en poids.

12. Procédé selon l'une quelconque des revendications précédentes **caractérisé en ce que** le laitier a une basicité CaO/SiO₂ comprise entre 3 et 6.
